# EUROPEAN PATENT SPECIFICATION

(11) **EP 3 169 086 B1**
(45) Date of publication and mention of the grant of the patent: **27.04.2022**
(21) Application number: 15893541.1
(22) Date of filing: 30.11.2015
(51) Int. Cl.: H04W 4/00, H04N 7/00, H04N 21/43, H04N 5/76, H04W 84/18, H04W 88/04

(54) **CONNECTION METHOD FOR MULTIMEDIA PLAYING DEVICE, MASTER DEVICE, CONTROL TERMINAL, AND SYSTEM**
VERBINDUNGSVERFAHREN FÜR MULTIMEDIAWIEDERGABEVORRICHTUNG, MASTER-VORRICHTUNG, STEUERUNGSENDGERÄT UND SYSTEM
PROCÉDÉ DE CONNEXION DESTINÉ À UN DISPOSITIF DE LECTURE DE CONTENU MULTIMÉDIA, DISPOSITIF MAÎTRE, TERMINAL DE COMMANDE ET SYSTÈME

(30) Priority: 20.08.2015 CN 201510514729
(43) Date of publication of application: 17.05.2017
(60) Divisional application: 22162582.5
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Shangbo, Dongguan Guangdong 523860 (CN)
(74) Representative: Mewburn Ellis LLP
(86) International application number: PCT/CN2015/096069
(87) International publication number: WO 2017/028396

(56) References cited:
- EP-A1- 2 750 353
- CN-A- 102 714 756
- CN-A- 103 391 228
- CN-A- 103 581 816
- CN-A- 104 038 255
- US-A1- 2010 260 348
- US-A1- 2010 284 389
- US-A1- 2012 040 720
- US-A1- 2012 099 594
- US-A1- 2013 007 202

## Description

### TECHNICAL FIELD

The present disclosure relates to the field of multimedia playing technology, and particularly to a connection method for a multimedia playing device, a main device, a control terminal, and a system.

### BACKGROUND

Currently, multimedia playing devices are generally integrated with network communication function, a plurality of multimedia devices in different regions can form a multimedia playing system via a connection network. Typically, a plurality of playing devices of a multimedia playing system can form a private network in a wireless manner, for example, can form the private network via Wireless Mesh network technology, and each playing device can exchange information and data via the private network. Wherein at least one playing device is configured to connect to a router to access the Internet and LAN (Local Area Network) and acquire multimedia data there from, the playing device can be referred to as "main device" of the multimedia playing system while other playing devices can be referred to as "slave device".

A plurality of multimedia playing devices of a multimedia playing system can play multimedia files individually or synchronously. The plurality of multimedia playing devices can also be divided into multiple playing groups and each group can play different multimedia files so as to provide user with improved use experience.

Mobile terminal (such as Smart phone) conducted as a control terminal can connect with and control a multimedia playing system via wireless communication. Normally, a mobile terminal can establish a connection with the multimedia playing system via Wireless Fidelity (Wi-Fi); alternatively, the mobile terminal can establish a Bluetooth connection with one multimedia playing device of the multimedia playing system, such that multimedia data stored in the mobile terminal can be sent directly to the multimedia playing device, and the multimedia playing device can in turn sent the multimedia data received to other multimedia playing devices of the system via a private network.

Generally, there are two approaches to establish a Bluetooth connection. In one approach, the user can choose the name of a Bluetooth device desired to be connected manually, and establish a Bluetooth connection through entering a correct password or PIN; in another approach, make one device to acquire Bluetooth connection information of another device via Near Field Communication (NFC) and other technologies and then establish a Bluetooth connection automatically based on the information acquired. Typically, the above two approaches can be applied to establish a connection between two devices. However, a multimedia playing system usually includes multiple playing devices; when it is required to establish a Bluetooth connection between a mobile terminal and a multimedia playing system; in fact, it is required to establish the Bluetooth connection between the mobile terminal and some playing device of the multimedia playing system. The above mentioned second approach requires the user to take the initiative to come close to a multimedia playing device desired to be connected with and therefore is not user-friendly; as a result, the first approach is usually adopted in practice. In addition, in order to avoid the user to manually turn on or turn off Bluetooth function of the multimedia playing device frequently, a Bluetooth unit of the multimedia playing device will be in a normally open state. In this case, numerous Bluetooth unit names can be displayed in the interface of a Bluetooth unit list of the mobile terminal, which includes the Bluetooth unit name of each playing device of the multimedia playing system, the Bluetooth unit name of other Bluetooth devices around the user (such as Bluetooth headsets, Bluetooth watches, or Bluetooth bracelets, etc.), or even the Bluetooth unit name of Bluetooth devices of the neighbor. Numerous Bluetooth unit names appear at the same time will cause confusion for the user to choose, this is because the user does not know which one to choose to connect and it is possible to make a wrong choice; once a wrong choice has occurred, disconnection and re-selection will be required. If the user wants to use one playing group of the multimedia playing system to play multimedia files, the user may have no idea about which playing device of the playing group should be connected. Thus, existing connection approaches between the mobile terminal and multimedia playing devices is inconvenient for the user to use.

Document 1 (US2010/284389A1) discloses systems and methods for providing media playback in a networked environment. In one embodiment, a networked media playback device is configured to provide a web server for delivering data indicative of a browser-renderable control interface for the networked media playback device, or for a related networked media playback system. In overview, the user of a networked device, such as a wireless web enabled device, is able to render the control interface in a web browser, and in this manner control playback of digital media via the networked media playback device or networked media playback system.

Document 2 (US2012/099594A1) discloses a wired and wireless media transport technology that allows for the simultaneous transmission of media to multiple zones while maintaining precise timing synchronization. A user can have a network of speakers, and independently select which ones are actively playing and have their playback synchronized. The media itself can be audio or video. The transmission method of media into the network can be wired, as through an auxiliary cable, or wireless as with Bluetooth or WiFi. The speakers/endpoints themselves are governed in a self-forming network. Audio is injected into the network from a source and the end-point network itself controls audio/video distribution, timing, and rendering.

Document 3 (US2010260348A1) discloses a methods and a systems for network addressable loudspeakers and audio play. One or more network addressable loudspeakers are registered at a server. An end user selects a network addressable loudspeaker to output audio, and an audio file is streamed from an audio source to the selected network addressable loudspeaker.

Document 4 (EP2750353A1) discloses a terminal device. The terminal device includes a multimedia part configured to play back a content, a communicator configured to perform communication, a short-range wireless communication module configured to share communication connection information with an external device, and when tagged with the external device while a content is played back, a controller configured to control the communicator to be connected to the external device according to the communication connection information and transmit a synchronization signal and the played back content. Accordingly, the terminal device shares a synchronized content with an external device using a User Interface (Ul) for controlling a plurality of external devices.

### SUMMARY

Embodiments of the present disclosure aim to provide connection methods applied to a main device and to a control terminal, and further provide the main device and the control terminal to address the problem that the operation for establishing a connection between a control terminal and a multimedia playing system is too complicated.

According to the first aspect of the present disclosure, it is provided a connection method for a multimedia playing device of a multimedia playing system. The multimedia playing system comprises a plurality of multimedia playing devices which comprises at least one main device and at least one slave devices. The plurality of multimedia playing devices communicate with each other through a private network. The method is applied in the main device and includes: receiving selection information based on a playing device information list from a control terminal, wherein the playing device information list contains a name of the main device and names of the at least one slave devices; determining a playing device to be connected in accordance with the selection information; controlling the playing device to be connected to turn on a particular type of wireless connection function; and acquiring wireless connection information of the particular type of wireless connection function of the playing device to be connected from the playing device to be connected; and transmitting the wireless connection information acquired to the control terminal, wherein the wireless connection information is configured for the control terminal to establish a particular type of wireless communication connection with the playing device to be connected in accordance with the wireless connection information.

According to the second aspect of the present disclosure, it is provided a connection method for a multimedia playing device of a multimedia playing system. The multimedia playing system comprises a plurality of multimedia playing devices which comprises at least one main device and at least one slave devices. The plurality of multimedia playing devices communicate with each other through a private network, the method is applied in a control terminal and includes: transmitting selection information based on a playing device information list to a main device, to cause the main device to determine a playing device to be connected in accordance with the selection information, control the playing device to be connected to turn on a particular type of wireless connection function, acquire wireless connection information of the particular type of wireless connection function of the playing device to be connected from the playing device to be connected, as well as transmit the wireless connection information acquired to the control terminal, wherein the playing device information list contains a name of the main device and names of the at least one slave devices; receiving the wireless connection information from the main device by the control terminal; and establishing a particular type of wireless communication connection with the playing device to be connected in accordance with the wireless connection information by the control terminal.

According to the third aspect of the present disclosure, it is provided a main device, which is arranged in a multimedia playing system. The multimedia playing system comprises a plurality of multimedia playing devices which comprises the main device and at least one slave devices. The plurality of multimedia playing devices communicate with each other through a private network., The main device includes: a selection information receiving unit, configured to receive selection information based on a playing device information list sent from a control terminal, wherein the playing device information list contains a name of the main device and names of the at least one slave devices; a wireless connection information acquiring unit, configured to determine a playing device to be connected in accordance with the selection information, control the playing device to be connected to turn on a particular type of wireless connection function, and acquire wireless connection information of the particular type of wireless connection function of the playing device to be connected from the playing device to be connected; and a wireless connection information transmitting unit, configured to transmit the wireless connection information acquired to the control terminal, wherein the wireless connection information is configured for the control terminal to establish a particular type of wireless communication connection with the playing device to be connected in accordance with the wireless connection information.

According to the fourth aspect of the present disclosure, it is provided a control terminal, including: a selection information transmitting unit, configured to transmit selection information based on a playing device information list to a main device of a multimedia playing system, to cause the main device to determine a playing device to be connected in accordance with the selection information, control the playing device to be connected to turn on a particular type of wireless connection function, acquire wireless connection information of the particular type of wireless connection function of the playing device to be connected from the playing device to be connected, and transmit the wireless connection information acquired to the control terminal, wherein the multimedia playing system comprises a plurality of multimedia playing devices which comprises the main device and at least one slave devices, wherein the plurality of multimedia playing devices communicate with each other through a private network, the playing device information list contains a name of the main device and names of the at least one slave devices; a wireless connection information receiving unit, configured to receive the wireless connection information from the main device; and a wireless communication connection establishing unit, configured to establish a particular type of wireless communication connection with the playing device to be connected in accordance with the wireless connection information.

Further aspects of the present disclosure are provided in the dependent claims.

With aid of connection schemes of a multimedia playing device of a multimedia playing system of the present disclosure, a control terminal can transmit selection information based on a playing device information list to a main device of a multimedia playing system, wherein, the playing device information list contains the name of the main device and the name of a slave device. After receiving the selection information, the main device can determine a playing device to be connected, which can be the main device or a slave device, as well as acquire wireless connection information of the playing device to be connected and transmit the same to the control terminal, whereby the control terminal can establish a wireless communication connection with the device to be connected in accordance with the wireless connection information. Through the technical schemes described above, it is not necessary for the user to know connection information (such as the name of a wireless unit and password) required for establishing a wireless communication connection of the playing device to be connected. Automatic connection between the control terminal and the playing device to be connected can be achieved via selecting the name of the playing device to be connected from the playing device information list of the control terminal. It can be seen that the process can be implemented easily and quickly as well as effectively enhance the user experience.

### BRIEF DESCRIPTION OF THE DRAWINGS

FIG. 1 is a schematic flowchart illustrating a connection method for a multimedia playing device of a multimedia playing system according to the first embodiment of the present disclosure;
FIG. 2 is a schematic flowchart illustrating a connection method for a multimedia playing device of a multimedia playing system according to the second embodiment of the present disclosure;
FIG. 3 is a schematic flowchart illustrating a connection method of a music playing device of a music playing system according to the third embodiment of the present disclosure;
FIG. 4 is a structure block diagram illustrating a main device according to the fourth embodiment of the present disclosure;
FIG. 5 is a structure block diagram illustrating a control terminal according to the fifth embodiment of the present disclosure;
FIG. 6 is a structure block diagram illustrating a multimedia playing system according to the sixth embodiment of the present disclosure; and
FIG. 7 is a structure block diagram illustrating a multimedia playing device according to the sixth embodiment of the present disclosure.

### DETAILED DESCRIPTION OF ILLUSTRATED EMBODIMENTS

Technical schemes of the present disclosure will be described in detail below with refer to embodiments in conjunction with accompanying drawings. Embodiments described herein are used to explain rather than restrict the present disclosure. Only relevant parts rather than the whole structure of the present disclosure are illustrated in the accompanying drawings.

For ease of explanation, some embodiments will be presented as processes or methods hereinafter. Although steps are illustrated in sequence in the flowcharts, some or all of the steps can be performed in parallel, concurrently, or simultaneously. Moreover, the sequence of each step can be rearranged. A process can be terminated once corresponding steps thereof have completed or, a process can still include other additional steps not illustrated in the drawings. A process can correspond to a method, a function, a procedure, a sub-routine, or a sub-program, and the like.

### First embodiment

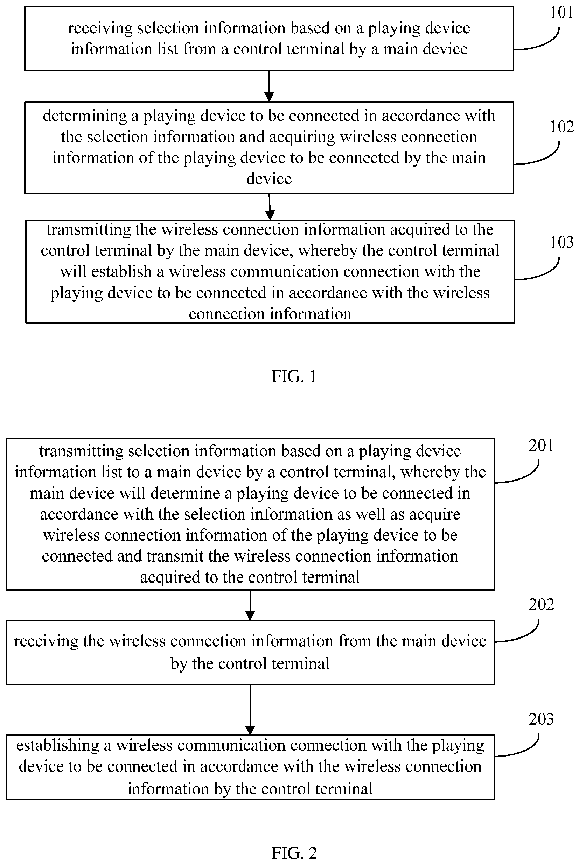

FIG. 1 is a schematic flowchart illustrating a connection method for a multimedia playing device of a multimedia playing system according to the first embodiment of the present disclosure. The method can be executed by a main device of a multimedia playing system and can be achieved by hardware and/or software.

As illustrated in FIG.1, the method includes the following steps.

Step 101, a main device receives selection information based on a playing device information list from a control terminal; wherein the playing device information list contains the name of the main device and the name of a slave device.

As one implementation, a plurality of multimedia playing devices of a multimedia playing system can form a private network via Wi-Fi or other wireless technologies such as Wireless Mesh network technology, and each playing device can exchange information and data through the private network. Among which, at least one playing device can couple to a router in a wired or wireless manner to access the Internet or LAN and acquire multimedia data there from. The at least one playing device mentioned above can be referred to as "main device" of the multimedia playing system; on the other hand, other playing devices of the system can be referred to as "slave device". The multimedia playing device can be used to play multimedia files such as music, video, and picture.

As an exemplary implementation, the control terminal can be a smart phone, a tablet PC, a laptop computer, or other mobile terminals, it can establish a connection with the private network of the multimedia playing system in a wireless manner such as via Wi-Fi; for example, it can couple to a router which has connected with the main device and then access and control playing devices of the private network of the multimedia playing system. In this embodiment, the selection information based on the playing device information list, which is received by the main device from the control terminal, can be transmitted through Wi-Fi. As an example, upon reception of the selection information, an authentication of the control terminal can be conducted; proceed to the next step only when the authentication is successful so as to ensure the security of the multimedia playing system.

As an exemplary implementation, the control terminal can establish a wireless connection with one multimedia playing device of the multimedia playing system and transmit multimedia data stored in the control terminal per se to the multimedia playing device directly. The multimedia playing device can transfer the multimedia data received to other multimedia playing devices of the system via the private network either. The wireless connection referred to herein can include Bluetooth connection, Infrared connection, and other wireless connection manners; hereinafter, take Bluetooth connection as an example. As a traditional manner to establish a Bluetooth connection, an interface of a Bluetooth unit name list is displayed at the control terminal and numerous wireless unit names are shown therein. Each wireless unit name needs to be set in advance in a device that a corresponding wireless unit belongs to, and wireless units can be named in different approaches. In this situation, the user may be confused because he or she may have no idea about which one to choose. In embodiments of the present disclosure, the playing device information list contains the name of the main device and the name of a slave device, which can be a device name that has been set uniformly by the control terminal, for example, the device name can be set by system by default or set by user according to actual needs. For example, the name of the main device or the name of the slave device (that is, device name) can include model, location, various performance parameters, and so on (such as supported multimedia format, supported profile, memory, current working status, and the like) of the playing device. For example, the device name of a playing device can be "M101-Living room-MP3, AVI, and WAV" or "M102-Bedroom 2-Playing". The device name can be updated dynamically, for example, the main device can acquire the current working status and other information of each playing device via the private network and transmit the same to the control terminal, whereby the control terminal can update the name of each corresponding playing device. As an example, the selection information can include the device name of a selected playing device, such as the name of the main device and/or the name of at least one slave device.

Moreover, the playing device information list can also include the name of a playing group that the main device belongs to and the name of a playing group that the slave device belongs to. A plurality of multimedia playing devices of a multimedia playing system can play multimedia files separately or synchronously. The plurality of multimedia playing devices can be divided into multiple playing groups and each playing group can play different multimedia files. Therefore, the playing device information list can include the name of a playing group that a playing device belongs to. Correspondingly, the selection information can be playing group selection information and the name of a selected playing group can be included therein.

Step 102, the main device determines a playing device to be connected in accordance with the selection information and acquires wireless connection information of the playing device to be connected.

As an example, the playing device to be connected can be a playing device that the control terminal wants to connect with. If the device name of a selected playing device is contained in the selection information, the main device can determine the playing device to be connected in accordance with the device name; if the selection information is specified as playing group selection information, the main device can determine the playing device to be connected in accordance with the playing group selection information and a predetermined manner. For example, the main device can determine a selected playing group in accordance with the playing group selection information and then select the playing device to be connected from this playing group in the predetermined manner. Based on the predetermined manner, the main device can make a selection randomly or according to parameter information such as working status of playing devices.

As one implementation, after determining the playing device to be connected, the main device can acquire the wireless connection information of the playing device to be connected via the private network. For example, the playing device can be a slave device, in this situation, the slave device can transmit Bluetooth connection information thereof to the main device; on the other hand, the playing device can be the main device, and in such a situation, the main device can acquire its own Bluetooth connection information directly. The Bluetooth connection information can include the name of a Bluetooth unit, the Media Access Control (MAC) address of a Bluetooth unit, a connection password, and other information.

Taking into account energy saving, Bluetooth units of each playing device can be turned off in advance, and the operation of this step can be implemented as: the main device determines the playing device to be connected in accordance with the selection information and control this playing device to turn on wireless connection function; the main device acquires wireless connection information of the playing device to be connected. That is to say, after determining the playing device to be connected, the main device can control the determined playing device to be connected to turn on wireless connection function, for example, turn on a Bluetooth unit. For example, if the playing device to be connected is a slave device, the main device can send relevant control data to the playing device to be connected to turn on wireless connection function, whereby the playing device to be connected will turn on wireless connection function in accordance with the control data. If the playing device to be connected is the main device per se, the main device can turn on wireless connection function thereof directly.

Step 103, the main device transmits the wireless connection information acquired to the control terminal, whereby the control terminal can establish a wireless communication connection with the playing device to be connected in accordance with the wireless connection information.

As an example, the main device transmit the acquired information such as the name of a Bluetooth unit, the MAC address of a Bluetooth unit, and a connection password to the control terminal, whereby the control terminal can establish a Bluetooth communication connection with the playing device to be connected in accordance with the above mentioned information. Once the Bluetooth connection is established, the control terminal can transmit multimedia data to the connected playing device via Bluetooth, whereby the connected playing device can play multimedia files corresponding to the multimedia data. If simultaneous playing of a playing group is required, the Bluetooth connected playing device can transmit the multimedia data received to other playing devices of the same playing group, whereby simultaneous playing of multiple playing devices of the playing group can be achieved. Moreover, the control terminal can transmit information (such as song name, network music server storing the song, Uniform Resource Locator (URL), and other information) of multimedia files desired to be played to the Bluetooth connected playing device thereof such that the playing device can couple to a corresponding network music server as well as download audio data and play the song.

Through the connection method of a multimedia playing device described above, a main device can receive selection information based on a playing device information list from a control terminal, among which the playing device information list contains the name of the main device and the name of a slave device; the main device determines a playing device to be connected in accordance with the selection information and acquires wireless connection information of the determined playing device to be connected, and then transmits the wireless connection information acquired to the control terminal, whereby the control terminal can establish a wireless communication connection with the playing device to be connected in accordance with the wireless connection information. With aid of the technical schemes described above, it is not necessary for the user to know connection information (such as the name of a wireless unit and password) desired for establishing a wireless communication connection of the playing device to be connected. Automatic connection between the control terminal and the playing device to be connected can be achieved via selecting the name of the playing device to be connected from the playing device information list of the control terminal. It can be seen that the process can be performed easily and quickly, and therefore user experience can be effectively improved.

### Second embodiment

FIG. 2 is a schematic flowchart illustrating a connection method for a multimedia playing device of a multimedia playing system according to the second embodiment of the present disclosure. This method can be executed by a control terminal configured to control a multimedia playing system and can be implemented with hardware and/or software. As illustrated in FIG. 2, the method includes the following steps.

Step 201, the control terminal transmits selection information based on a playing device information list to a main device, whereby the main device will determine a playing device to be connected in accordance with the selection information as well as acquire wireless connection information of the playing device to be connected and then transmit the wireless connection information acquired to the control terminal.

As an example, the playing device information list contains the name of the main device and the name of a slave device.

Similar to the embodiment described above, the control terminal used in this embodiment can be a smart phone, a tablet PC, a laptop computer, or other mobile terminals, it can establish a connection with the private network of the multimedia playing system in a wireless manner such as via Wi-Fi, for example, it can couple to a router which has been connected with the main device and then access and control playing devices of the private network of the multimedia playing system.

As an example, the playing device information list can still include the name of a playing group that the main device belongs to and the name of a playing group that a slave device belongs to. Based on this, the operation of this step can be performed as follows: the control terminal transmits playing group selection information based on the playing device information list to the main device, whereby the main device can determine the playing device to be connected in accordance with a predetermined manner and the playing group selection information, acquire wireless connection information of the playing device to be connected, and transmit the acquired wireless connection information to the control terminal.

For example, the wireless connection information referred to herein can be Bluetooth connection information, such as the name of a Bluetooth unit, the MAC address of a Bluetooth unit, a connection password, and other information.

As one exemplary implementation, prior to step 201, the method can further include the following processes: the control terminal displays the playing device information list and generate the selection information based on the playing device information list in accordance with a selection operation triggered by user. For example, the playing device information list, which contains the device name of each playing device and the name of respective playing group that each playing device belongs to, is displayed on a screen of the control terminal, from which user can choose a playing device or a playing group to be connected to the control terminal according to actual needs. In practical operation, once the device name of a playing device on the screen is clicked by user, it is considered that a selection operation of the playing device is triggered by user; similarly, once the name of a playing group is clicked, it is considered that a selection operation of the playing group is triggered.

Step 202, the control terminal receives the wireless connection information sent by the main device.

Step 203, the control terminal establishes a wireless communication connection with the playing device to be connected in accordance with the wireless connection information.

Through the connection method of a multimedia playing device described above, a control terminal can transmit selection information based on a playing device information list to a main device and receive, from the main device, wireless connection information of a playing device to be connected corresponding to the selection information; the control terminal establishes a wireless communication connection with the playing device to be connected in accordance with the wireless connection information. The playing device information list contains the name of the main device and the name of a slave device. With aid of the technical schemes described above, it is not necessary for the user to know connection information (such as the name of a wireless unit and password) required for establishing a wireless communication connection of the playing device to be connected. Automatic connection between the control terminal and the playing device to be connected can be achieved via selecting the name of the playing device to be connected from the playing device information list of the control terminal. It can be seen that the process can be implemented easily and quickly, and user experience can be effectively improved.

### Third embodiment

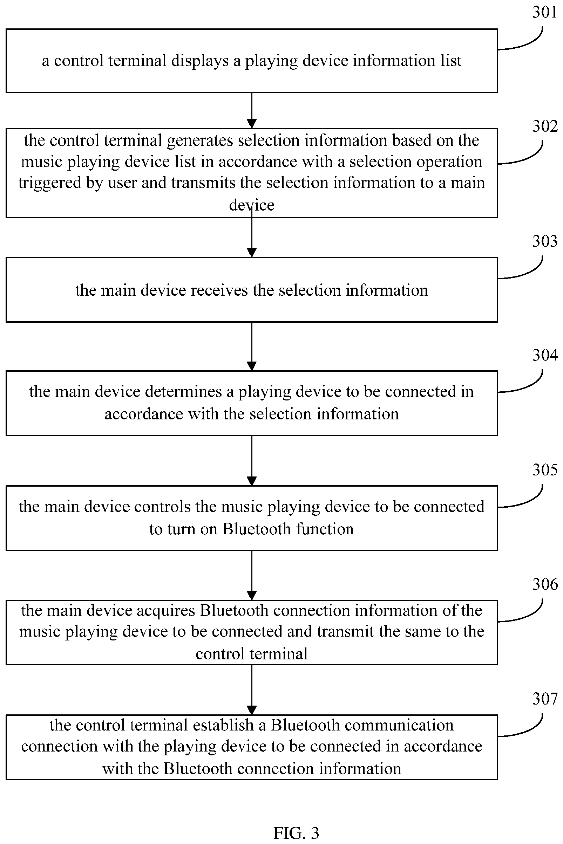

FIG. 3 is a schematic flowchart illustrating a connection method of a music playing device of a music playing system according to the third embodiment of the present disclosure. The technical scheme of this embodiment is proposed on the basis of the embodiments described above, and hereinafter, take a music playing system as an example for further explanation. As illustrated in FIG. 3, the method includes the following steps.

Step 301, a control terminal displays a playing device information list.

Step 302, the control terminal generates selection information based on the music playing device list in accordance with a selection operation triggered by user and transmits the selection information to a main device.

As an example, the user can select a music playing device or a playing group desired to be connected from the playing device information list displayed on a screen of the control terminal.

Step 303, the main device receives the selection information.

Step 304, the main device determines a playing device to be connected in accordance with the selection information.

As an example, if the main device judges that the name of the determined music playing device is contained in the selection information, the music playing device can be determined as the music playing device to be connected directly; otherwise, if the main device judges that only the name of a playing group is contained in the selection information, it will choose a music playing device randomly from the playing group as the music playing device to be connected.

Step 305, the main device controls the music playing device to be connected to turn on Bluetooth function.

Step 306, the main device acquires Bluetooth connection information of the music playing device to be connected and transmit the same to the control terminal.

Step 307, the control terminal establishes a Bluetooth communication connection with the playing device to be connected in accordance with the Bluetooth connection information.

Through the connection method of a music playing device of a music playing system described above, it is not necessary for the user to know connection information (such as the name of a wireless unit and password) used to establish a Bluetooth communication connection of the music playing device to be connected. Automatic connection between the control terminal and the music playing device to be connected can be achieved via selecting the device name of the music playing device to be connected or the name of a playing group that the music playing device belongs to from the playing device information list of the control terminal. It can be seen that the process can be implemented easily and quickly, and user experience can be effectively improved.

### Forth embodiment

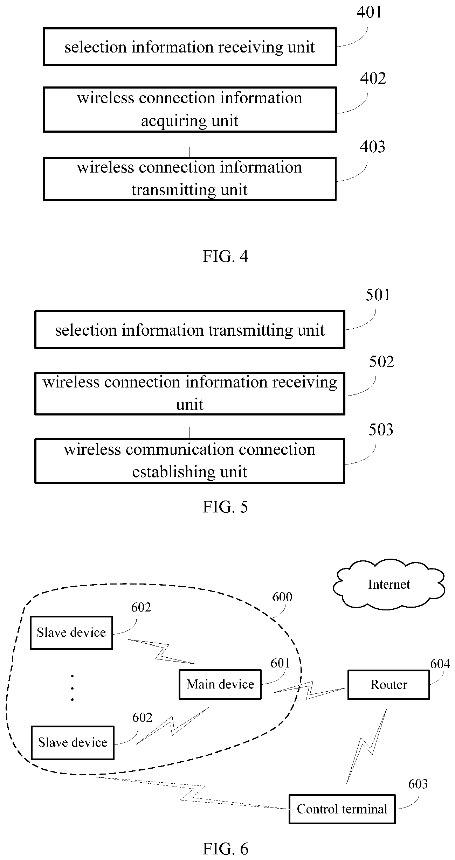

FIG. 4 is a structure block diagram illustrating a main device according to the fourth embodiment of the present disclosure. The main device can be arranged in a multimedia playing system, and as illustrated in FIG. 4, it can include a selection information receiving unit 401, a wireless connection information acquiring unit 402, and a wireless connection information transmitting unit 403.

The selection information receiving unit 401 is configured to receive selection information based on a playing device information list from a control terminal; the playing device information list contains the name of the main device and the name of a slave device of the multimedia playing system. The wireless connection information acquiring unit 402 is configured to determine a playing device to be connected in accordance with the selection information and acquire wireless connection information of the playing device to be connected. The wireless connection information transmitting unit 403 is configured to transmit the wireless connection information acquired to the control terminal, whereby the control terminal will establish a wireless communication connection with the playing device to be connected in accordance with the wireless connection information.

On the basis of the main device described above, the playing device information list can still contain the name of a playing group that the main device belongs to and the name of a playing group that a slave device belongs to. Based on this, the selection information receiving unit 401 is further configured to receive playing group selection information based on the playing device information list from the control terminal; the wireless connection information acquiring unit 402 is further configured to determine the playing device to be connected in accordance with the playing group selection information and a predetermined manner, and acquire wireless connection information of the playing device to be connected.

The wireless connection information acquiring unit 402 is further configured to determine the playing device to be connected in accordance with the selection information, control the playing device to be connected to turn on wireless connection function, and acquire wireless connection information of the playing device to be connected.

As an example, the wireless connection information can include Bluetooth connection information.

### Fifth embodiment

FIG. 5 is a structure block diagram illustrating a control terminal according to the fifth embodiment of the present disclosure. As illustrated in FIG. 5, the control terminal includes a selection information transmitting unit 501, a wireless connection information receiving unit 502, and a wireless communication connection establishing unit 503.

The selection information transmitting unit 501 is configured to transmit selection information based on a playing device information list to a main device of a multimedia playing system, whereby the main device will determine a playing device to be connected in accordance with the selection information as well as acquire wireless connection information of the playing device to be connected and transmit the wireless connection information acquired to the control terminal; wherein the playing device information list contains the name of the main device and the name of a slave device of the multimedia playing system. The wireless connection information receiving unit 502 is configured to receive the wireless connection information from the main device. The wireless communication connection establishing unit 503 is configured to establish a wireless communication connection with the playing device to be connected in accordance with the wireless connection information.

As an example, the playing device information list can further contain the name of a playing group that the main device belongs to and the name of a playing group that a slave device belongs to. Based on this, the selection information transmitting unit 501 is configured to transmit playing group selection information based on the playing device information list to the main device, whereby the main device can determine the playing device to be connected in accordance with the playing group selection information and a predetermined manner as well as acquire wireless connection information of the playing device to be connected and transmit the wireless connection information acquired to the control terminal.

On the basis of the structure described above, the control terminal can further include a playing device information list displaying unit and a selection information generating unit. The playing device information list displaying unit can be configured to display the playing device information list before the selection information based on the playing device information list is transmitted to the main device. The selection information generating unit is configured to generate the selection information based on the playing device information list in accordance with a selection operation triggered by user.

As an exemplary implementation, the wireless connection information includes Bluetooth connection information.

### Sixth embodiment

According to the sixth embodiment of the present disclosure, it is provided a multimedia system, which includes at least one main device according to embodiments of the present disclosure, at least one control terminal according to embodiments of the present disclosure, and at least one slave device.

The multimedia system includes a multimedia playing system and a control terminal; the main device and the slave device mentioned before are included in the multimedia playing system, and the control terminal is configured to control the multimedia playing system. Generally, one main device is arranged in the multimedia playing system; however, if there is a large number of a slave device, multiple main devices can be deployed correspondingly. Similarly, in general, one control terminal is arranged in the multimedia playing system; however, if there are more than one users want to control the multimedia playing system, multiple control terminals can be deployed. That is to say, multiple control terminals are allowed to connect with the main device via a Wi-Fi connection, and the multiple control terminals are allowed to establish a wireless communication connection such as Bluetooth connection with multiple multimedia playing devices of the multimedia playing system simultaneously.

FIG. 6 is a structure block diagram illustrating the multimedia system according to the sixth embodiment of the present disclosure. As illustrated in FIG. 6, the multimedia system includes a main device 601, at least one slave device 602, and a control terminal 603. The control terminal 603 is configured to transmit selection information based on a playing device information list to the main device 601, receive wireless connection information from the main device 601, and establish a wireless communication connection with a playing device to be connected (the main device 601 or any slave device 602) in accordance with the wireless connection information. The main device 601 is configured to receive selection information based on the playing device information list sent from the control terminal 603, determine the playing device to be connected in accordance with the selection information, acquire wireless connection information of the playing device to be connected, and transmit the wireless connection information acquired to the control terminal 603. The playing device information list contains the name of the main device 601 and the name of the slave device 602.

For example, the main device 601 and a router 604 can be connected via Wi-Fi, the main device 601 and the slave device 602 can connect to form a private network via Wireless Mesh network technology. The control terminal 603 can couple to the router 604 via Wi-Fi either. The control terminal 603 can connect with one playing device of the multimedia playing system 600 via Bluetooth.

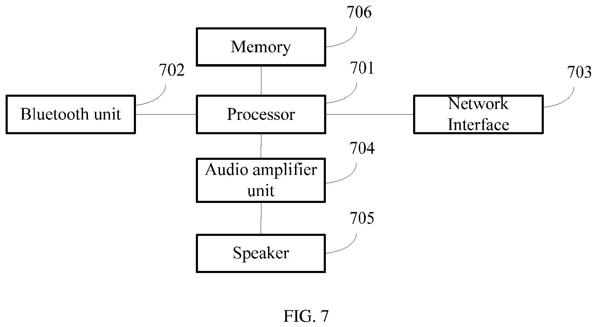

Design of the internal structure of the multimedia playing device will be described in detail below with refer to FIG. 7, which is a structure block diagram illustrating the multimedia playing device according to the sixth embodiment.

As illustrated in FIG. 7, the multimedia playing device can be provided with the following functional units. The multimedia playing device has a processor 701, as the core of the playing device, the processor 701 is configured to perform control program and communicate with peripheral functional units so as to coordinate the work of each unit. The multimedia playing device has a Bluetooth unit 702 responsible for Bluetooth communication, whereby the playing device can establish a connection with another device (such as a smart phone conducted as a control terminal) equipped with Bluetooth function via Bluetooth. The Bluetooth unit 702 is further configured to acquire audio data or control data and transfer the same to the processor 701; similarly, the Bluetooth unit 702 is further configured to transfer audio data and control data transmitted from the processor 701 to other Bluetooth equipment. The multimedia playing device has a network interface 703, which can be a wired network interface or a wireless network interface complied with 802.11 standards. Via the network interface 703, the processor 701 can connect to the Internet and acquire network streaming media data. Furthermore, via the network interface 703, especially the network interface 703 in a wireless manner, multiple playing devices can form a wireless multimedia playing system, that is, a private network, whereby simultaneous playing of multimedia can be achieved. Each control terminal can access the multimedia playing system through Wi-Fi and control the multimedia playing system per se as well as playing devices of the system. The multimedia playing device has an audio amplifier unit 704, which is configured to receive audio data decoded or Digital/Analog converted by the processor 701. The audio amplifier unit 704 can perform power amplification on analog audio signals transmitted from the processor 701 so as to drive a speaker 705. The speaker 705 is a sound reduction component, and in the multimedia playing device, one or more speakers can be provided. The multimedia playing device also has a memory 706, which is configured to store programs performed by the processor 701 and some configuration data of the multimedia playing system, for example, network connection data, volume information, group information, and multimedia lists to be played. As one implementation, the functional units are included in the main device and the slave device respectively; in the multimedia playing system, a playing device configured to establish a wired or wireless connection with the router via the network interface 703 directly will be referred to as "main device", and other playing devices will be referred to as "slave device". The slave devices will form the private network together with the main device via the network interface 703.

The main device, the control terminal, the multimedia system and other equipment described above have corresponding functional units and therefore can perform the connection method of a multimedia playing device of a multimedia playing system according to embodiments of the present disclosure respectively, and corresponding advantages can be obtained. For details of the equipment, please refer to the description of the connection method of a multimedia playing device of a multimedia playing system according to any embodiment described above.

The foregoing descriptions are merely embodiments of the present disclosure, and not intended for any restriction. Various modifications and alterations may be made to the present disclosure for those skilled in the art. The subject-matter of the present disclosure however is defined by the appended claims.

## Claims

1. A connection method for a multimedia playing device of a multimedia playing system, the multimedia playing system comprising a plurality of multimedia playing devices which comprises at least one main device and at least one slave devices, the plurality of multimedia playing devices communicating with each other through a private network, the method being applied in the main device and comprising:
receiving selection information based on a playing device information list from a control terminal (101), wherein the playing device information list contains a name of the main device and names of the at least one slave devices;
determining a playing device to be connected in accordance with the selection information;
controlling the playing device to be connected to turn on a particular type of wireless connection function;
acquiring wireless connection information of the particular type of wireless connection function of the playing device to be connected from the playing device to be connected (102); and
transmitting the wireless connection information acquired to the control terminal, wherein the wireless connection information is configured for the control terminal to establish a particular type of wireless communication connection with the playing device to be connected in accordance with the wireless connection information (103).

2. The method of claim 1, wherein the playing device information list further comprises a name of a playing group that the main device belongs to and a name of a playing group that the slave device belongs to; and wherein the selection information comprises a name of a selected playing device or a name of a selected playing group.

3. The method of claim 1 or 2, wherein the particular type of wireless connection function is a Bluetooth connection function, wherein the wireless connection information is Bluetooth connection information, and the particular type of wireless communication connection is a Bluetooth connection.

4. A connection method for a multimedia playing device of a multimedia playing system, the multimedia playing system comprising a plurality of multimedia playing devices which comprises at least one main device and at least one slave devices, the plurality of multimedia playing devices communicating with each other through a private network, the method being applied in a control terminal and comprising:
transmitting selection information based on a playing device information list to a main device, to cause the main device to determine a playing device to be connected in accordance with the selection information as well as control the playing device to be connected to turn on a particular type of wireless connection function, acquire wireless connection information of the particular type of wireless connection function of the playing device to be connected from the playing device to be connected, and transmit the wireless connection information acquired to the control terminal (201), wherein the playing device information list contains a name of the main device and names of the at least one slave devices;
receiving the wireless connection information from the main device (202); and
establishing a particular type of wireless communication connection with the playing device to be connected in accordance with the wireless connection information (203).

5. The method of claim 4, wherein the playing device information list further comprises a name of a playing group that the main device belongs to and a name of a playing group that the slave device belongs to; wherein the selection information comprises a name of a selected playing device or a name of a selected playing group.

6. The method of claim 4 or 5, wherein prior to the process of transmitting selection information based on a playing device information list to a main device by a control terminal, the method further comprises:
displaying the playing device information list by the control terminal (301); and
generating the selection information based on the playing device information list in accordance with a selection operation triggered by user (302).

7. The method of any of claims 4 to 6, wherein the particular type of wireless connection function is a Bluetooth connection function, wherein the wireless connection information is Bluetooth connection information, and the particular type of wireless communication connection is a Bluetooth connection.

8. A main device (601) arranged in a multimedia playing system (600), the multimedia playing system (600) comprising a plurality of multimedia playing devices which comprises the main device (601) and at least one slave devices (602), the plurality of multimedia playing devices communicating with each other through a private network, the main device (601) comprising:
a selection information receiving unit (401), configured to receive selection information based on a playing device information list sent from a control terminal (603), wherein the playing device information list contains a name of the main device (601) and names of the at least one slave devices (602);
a wireless connection information acquiring unit (402), configured to determine a playing device to be connected in accordance with the selection information, control the playing device to be connected to turn on a particular type of wireless connection function, and acquire wireless connection information of the particular type of wireless connection function of the playing device to be connected from the playing device to be connected; and
a wireless connection information transmitting unit (403), configured to transmit the wireless connection information acquired to the control terminal (603), wherein the wireless connection information is configured for the control terminal (603) to establish a particular type of wireless communication connection with the playing device to be connected in accordance with the wireless connection information.

9. The main device (601) of claim 8, wherein the playing device information list further comprises a name of a playing group that the main device (601) belongs to and a name of a playing group that the slave device (602) belongs to;
wherein the selection information comprises a name of a selected playing device or a name of a selected playing group.

10. The main device (601) of claim 8 or 9, wherein the particular type of wireless connection function is a Bluetooth connection function, wherein the wireless connection information is Bluetooth connection information, and the particular type of wireless communication connection is a Bluetooth connection.

11. A control terminal (603), comprising:
a selection information transmitting unit (501), configured to transmit selection information based on a playing device information list to a main device (601) of a multimedia playing system (600), to cause the main device (601) to determine a playing device to be connected in accordance with the selection information, control the playing device to be connected to turn on a particular type of wireless connection function, acquire wireless connection information of the particular type of wireless connection function of the playing device to be connected from the playing device to be connected, and transmit the wireless connection information acquired to the control terminal (603), wherein the multimedia playing system (600) comprises a plurality of multimedia playing devices which comprises the main device (601) and at least one slave devices (602), wherein the plurality of multimedia playing devices communicate with each other through a private network, the playing device information list contains a name of the main device (601) and names of the at least one slave devices (602);
a wireless connection information receiving unit (502), configured to receive the wireless connection information from the main device (601); and
a wireless communication connection establishing unit (503), configured to establish a particular type of wireless communication connection with the playing device to be connected in accordance with the wireless connection information.

12. The control terminal (603) of claim 11, wherein the playing device information list further comprises a name of a playing group that the main device (601) belongs to and a name of a playing group that the slave device (602) belongs to; and
wherein the selection information comprises a name of a selected playing device or a name of a selected playing group.

13. The control terminal (603) of claim 11 or 12, further comprising:
a playing device information list displaying unit, configured to display the playing device information list before the selection information based on the playing device information list is transmitted to the main device (601); and
a selection information generating unit, configured to generate the selection information based on the playing device information list in accordance with a selection operation triggered by user.

## Patentansprüche

1. Verbindungsverfahren für eine Multimediawiedergabevorrichtung eines Multimediawiedergabesystems, wobei das Multimediawiedergabesystem eine Vielzahl von Multimediawiedergabevorrichtungen umfasst, die mindestens eine Hauptvorrichtung und mindestens eine Nebenvorrichtung umfasst, wobei die Vielzahl von Multimediawiedergabevorrichtungen über ein privates Netzwerk miteinander kommunizieren, wobei das Verfahren in der Hauptvorrichtung angewendet wird und umfasst:
Empfangen von Auswahlinformationen auf der Grundlage einer Wiedergabevorrichtungsinformationsliste von einem Steuerungsendgerät (101), wobei die Wiedergabevorrichtungsinformationsliste einen Namen der Hauptvorrichtung und Namen der mindestens einen Nebenvorrichtung enthält;
Bestimmen einer zu verbindenden Wiedergabevorrichtung gemäß den Auswahlinformationen;
Steuern der zu verbindenden Wiedergabevorrichtung zum Aktivieren einer spezifischen Art von Drahtlosverbindungsfunktion;
Erfassen von Drahtlosverbindungsinformationen der spezifischen Art von Drahtlosverbindungsfunktion der zu verbindenden Wiedergabevorrichtung von der zu verbindenden Wiedergabevorrichtung (102); und
Senden der erfassten Drahtlosverbindungsinformationen an das Steuerungsendgerät, wobei die Drahtlosverbindungsinformationen so ausgelegt sind, dass das Steuerungsendgerät eine spezifische Art von Drahtloskommunikationsverbindung mit der zu verbindenden Wiedergabevorrichtung gemäß den Drahtlosverbindungsinformationen (103) herstellt.

2. Verfahren nach Anspruch 1, wobei die Wiedergabevorrichtungsinformationsliste ferner einen Namen einer Wiedergabegruppe, zu der die Hauptvorrichtung gehört, und einen Namen einer Wiedergabegruppe, zu der die Nebenvorrichtung gehört, umfasst; und wobei die Auswahlinformationen einen Namen einer ausgewählten Wiedergabevorrichtung oder einen Namen einer ausgewählten Wiedergabegruppe umfassen.

3. Verfahren nach Anspruch 1 oder 2, wobei die spezifische Art von Drahtlosverbindungsfunktion eine Bluetooth-Verbindungsfunktion ist, wobei die Drahtlosverbindungsinformationen Bluetooth-Verbindungsinformationen sind und die spezifische Art von Drahtloskommunikationsverbindung eine Bluetooth-Verbindung ist.

4. Verbindungsverfahren für eine Multimediawiedergabevorrichtung eines Multimediawiedergabesystems, wobei das Multimediawiedergabesystem eine Vielzahl von Multimediawiedergabevorrichtungen umfasst, die mindestens eine Hauptvorrichtung und mindestens eine Nebenvorrichtung umfasst, wobei die Vielzahl von Multimediawiedergabevorrichtungen über ein privates Netzwerk miteinander kommunizieren, wobei das Verfahren in einem Steuerungsendgerät angewendet wird und umfasst:
Senden von Auswahlinformationen auf der Grundlage einer Wiedergabevorrichtungsinformationsliste an eine Hauptvorrichtung zum Veranlassen der Hauptvorrichtung,
eine zu verbindende Wiedergabevorrichtung gemäß den Auswahlinformationen zu bestimmen sowie die zu verbindende Wiedergabevorrichtung dazu zu steuern, eine spezifische Art von Drahtlosverbindungsfunktion zu aktivieren, Drahtlosverbindungsinformationen der spezifischen Art von Drahtlosverbindungsfunktion der zu verbindenden Wiedergabevorrichtung von der zu verbindenden Wiedergabevorrichtung zu erfassen, und die erfassten Drahtlosverbindungsinformationen an das Steuerungsendgerät (201) zu senden, wobei die Wiedergabevorrichtungsinformationsliste einen Namen der Hauptvorrichtung und Namen der mindestens einen Nebenvorrichtung enthält;
Empfangen der Drahtlosverbindungsinformationen von der Hauptvorrichtung (202); und
Herstellen einer spezifischen Art von Drahtloskommunikationsverbindung mit der zu verbindenden Wiedergabevorrichtung gemäß den Drahtlosverbindungsinformationen (203).

5. Verfahren nach Anspruch 4, wobei die Wiedergabevorrichtungsinformationsliste ferner einen Namen einer Wiedergabegruppe, zu der die Hauptvorrichtung gehört, und einen Namen einer Wiedergabegruppe, zu der die Nebenvorrichtung gehört, umfasst; wobei die Auswahlinformationen einen Namen einer ausgewählten Wiedergabevorrichtung oder einen Namen einer ausgewählten Wiedergabegruppe umfassen.

6. Verfahren nach Anspruch 4 oder 5, wobei das Verfahren vor dem Prozess des Sendens von Auswahlinformationen auf der Grundlage einer Wiedergabevorrichtungsinformationsliste an eine Hauptvorrichtung durch ein Steuerungsendgerät ferner umfasst:
Anzeigen der Wiedergabevorrichtungsinformationsliste durch das Steuerungsendgerät (301); und
Erzeugen der Auswahlinformationen auf der Grundlage der Wiedergabevorrichtungsinformationsliste gemäß einer vom Benutzer (302) ausgelösten Auswahloperation.

7. Verfahren nach einem der Ansprüche 4 bis 6, wobei die spezifische Art von Drahtlosverbindungsfunktion eine Bluetooth-Verbindungsfunktion ist, wobei die Drahtlosverbindungsinformationen Bluetooth-Verbindungsinformationen sind und die spezifische Art von Drahtloskommunikationsverbindung eine Bluetooth-Verbindung ist.

8. Hauptvorrichtung (601), die in einem Multimediawiedergabesystem (600) angeordnet ist, wobei das Multimediawiedergabesystem (600) eine Vielzahl von Multimediawiedergabevorrichtungen umfasst, die die Hauptvorrichtung (601) und mindestens eine Nebenvorrichtung (602) umfasst, wobei die Vielzahl von Multimediawiedergabevorrichtungen über ein privates Netzwerk miteinander kommunizieren, wobei die Hauptvorrichtung (601) umfasst:
eine Auswahlinformationsempfangseinheit (401), die dafür ausgelegt ist, Auswahlinformationen auf der Grundlage einer von einem Steuerungsendgerät (603) gesendeten Wiedergabevorrichtungsinformationsliste zu empfangen, wobei die Wiedergabevorrichtungsinformationsliste einen Namen der Hauptvorrichtung (601) und Namen der mindestens einen Nebenvorrichtung (602) enthält;
eine Drahtlosverbindungsinformationserfassungseinheit (402), die dafür ausgelegt ist, eine zu verbindende Wiedergabevorrichtung gemäß den Auswahlinformationen zu bestimmen, die zu verbindende Wiedergabevorrichtung zum Aktivieren einer spezifischen Art von Drahtlosverbindungsfunktion zu steuern und Drahtlosverbindungsinformationen der spezifischen Art von Drahtlosverbindungsfunktion der zu verbindenden Wiedergabevorrichtung von der zu verbindenden Wiedergabevorrichtung zu erfassen; und
eine Drahtlosverbindungsinformationssendeeinheit (403), die dafür ausgelegt ist, die erfassten Drahtlosverbindungsinformationen an das Steuerungsendgerät (603) zu senden,
wobei die Drahtlosverbindungsinformationen so ausgelegt sind, dass das Steuerungsendgerät (603) eine spezifische Art von Drahtloskommunikationsverbindung mit der zu verbindenden Wiedergabevorrichtung gemäß den Drahtlosverbindungsinformationen herstellt.

9. Hauptvorrichtung (601) nach Anspruch 8, wobei die Wiedergabevorrichtungsinformationsliste ferner einen Namen einer Wiedergabegruppe, zu der die Hauptvorrichtung (601) gehört, und einen Namen einer Wiedergabegruppe, zu der die Nebenvorrichtung (602) gehört, umfasst;
wobei die Auswahlinformationen einen Namen einer ausgewählten Wiedergabevorrichtung oder einen Namen einer ausgewählten Wiedergabegruppe umfassen.

10. Hauptvorrichtung (601) nach Anspruch 8 oder 9, wobei die spezifische Art von Drahtlosverbindungsfunktion eine Bluetooth-Verbindungsfunktion ist, wobei die Drahtlosverbindungsinformationen Bluetooth-Verbindungsinformationen sind und die spezifische Art von Drahtloskommunikationsverbindung eine Bluetooth-Verbindung ist.

11. Steuerungsendgerät (603), umfassend:
eine Auswahlinformationssendeeinheit (501), die dafür ausgelegt ist, Auswahlinformationen auf der Grundlage einer Wiedergabevorrichtungsinformationsliste an eine Hauptvorrichtung (601) eines Multimediawiedergabesystems (600) zu senden, um zu veranlassen, dass die Hauptvorrichtung (601) eine zu verbindende Wiedergabevorrichtung gemäß den Auswahlinformationen bestimmt, die zu verbindende Wiedergabevorrichtung so steuert, dass sie eine spezifische Art von Drahtlosverbindungsfunktion aktiviert, Drahtlosverbindungsinformationen der spezifischen Art von Drahtlosverbindungsfunktion der zu verbindenden Wiedergabevorrichtung von der zu verbindenden Wiedergabevorrichtung erfasst und die erfassten Drahtlosverbindungsinformationen an das Steuerungsendgerät (603) sendet, wobei das Multimediawiedergabesystem (600) eine Vielzahl von Multimediawiedergabevorrichtungen umfasst, die die Hauptvorrichtung (601) und mindestens eine Nebenvorrichtung (602) umfasst, wobei die Vielzahl von Multimediawiedergabevorrichtungen über ein privates Netzwerk miteinander kommunizieren, die Wiedergabevorrichtungsinformationsliste einen Namen der Hauptvorrichtung (601) und Namen der mindestens einen Nebenvorrichtung (602) enthält;
eine Drahtlosverbindungsinformationsempfangseinheit (502), die dafür ausgelegt ist, die Drahtlosverbindungsinformationen von der Hauptvorrichtung (601) zu empfangen; und
eine
Drahtloskommunikationsverbindungherstellungseinheit (503), die dafür ausgelegt ist, eine spezifische Art von Drahtloskommunikationsverbindung mit der zu verbindenden Wiedergabevorrichtung gemäß den Drahtlosverbindungsinformationen herzustellen.

12. Steuerungsendgerät (603) nach Anspruch 11, wobei die Wiedergabevorrichtungsinformationsliste ferner einen Namen einer Wiedergabegruppe, zu der die Hauptvorrichtung (601) gehört, und einen Namen einer Wiedergabegruppe, zu der die Nebenvorrichtung (602) gehört, umfasst; und wobei die Auswahlinformationen einen Namen einer ausgewählten Wiedergabevorrichtung oder einen Namen einer ausgewählten Wiedergabegruppe umfassen.

13. Steuerungsendgerät (603) nach Anspruch 11 oder 12, ferner umfassend:
eine Wiedergabevorrichtungsinformationslistenanzeigeeinheit, die dafür ausgelegt ist, die Wiedergabevorrichtungsinformationsliste anzuzeigen, bevor die auf der Wiedergabevorrichtungsinformationsliste basierenden Auswahlinformationen an die Hauptvorrichtung (601) gesendet werden; und
eine Auswahlinformationserzeugungseinheit, die dafür ausgelegt ist, die Auswahlinformationen auf der Grundlage der Wiedergabevorrichtungsinformationsliste gemäß einer vom Benutzer ausgelösten Auswahloperation zu erzeugen.

## Revendications

1. Procédé de connexion pour un dispositif de lecture de contenu multimédia d'un système de lecture de contenu multimédia, le système de lecture de contenu multimédia comprenant une pluralité de dispositifs de lecture de contenu multimédia qui comprend au moins un dispositif principal et au moins un dispositif esclave, les dispositifs de la pluralité de dispositifs de lecture de contenu multimédia communiquant les uns avec les autres par l'intermédiaire d'un réseau privé, le procédé étant appliqué dans le dispositif principal et comprenant :
la réception d'informations de sélection sur la base d'une liste d'informations de dispositif de lecture depuis un terminal de commande (101), dans lequel la liste d'informations de dispositif de lecture contient un nom du dispositif principal et des noms de l'au moins un dispositif de lecture esclave ;
la détermination d'un dispositif de lecture à connecter en fonction des informations de sélection ;
la commande du dispositif de lecture à connecter pour activer un type particulier de fonction de connexion sans fil ;
l'acquisition d'informations de connexion sans fil du type particulier de fonction de connexion sans fil du dispositif de lecture à connecter depuis le dispositif de lecture à connecter (102) ; et
la transmission des informations de connexion sans fil acquises au terminal de commande, dans lequel les informations de connexion sans fil sont configurées pour que le terminal de commande établisse un type particulier de connexion de communication sans fil avec le dispositif de lecture à connecter en fonction des informations de connexion sans fil (103).

2. Procédé selon la revendication 1, dans lequel la liste d'informations de dispositif de lecture comprend en outre un nom d'un groupe de lecture auquel le dispositif principal appartient et un nom d'un groupe de lecture auquel le dispositif esclave appartient ; et dans lequel les informations de sélection comprennent un nom d'un dispositif de lecture sélectionné ou un nom d'un groupe de lecture sélectionné.

3. Procédé selon la revendication 1 ou 2, dans lequel le type particulier de fonction de connexion sans fil est une fonction de connexion Bluetooth, dans lequel les informations de connexion sans fil sont des informations de connexion Bluetooth, et le type particulier de connexion de communication sans fil est une connexion Bluetooth.

4. Procédé de connexion pour un dispositif de lecture de contenu multimédia d'un système de lecture de contenu multimédia, le système de lecture de contenu multimédia comprenant une pluralité de dispositifs de lecture de contenu multimédia qui comprend au moins un dispositif principal et au moins un dispositif esclave, les dispositif de la pluralité de dispositifs de lecture de contenu multimédia communiquant les uns avec les autres par l'intermédiaire d'un réseau privé, le procédé étant appliqué dans un terminal de commande et comprenant :
la transmission d'informations de sélection sur la base d'une liste d'informations de dispositif de lecture à un dispositif principal, pour amener le dispositif principal à déterminer un dispositif de lecture à connecter en fonction des informations de sélection ainsi qu'à commander le dispositif de lecture à connecter pour activer un type particulier de fonction de connexion sans fil, acquérir des informations de connexion sans fil du type particulier de fonction de connexion sans fil du dispositif de lecture à connecter depuis le dispositif de lecture à connecter, et transmettre les informations de connexion sans fil acquises au terminal de commande (201), dans lequel la liste d'informations de dispositif de lecture contient un nom du dispositif principal et des noms de l'au moins un dispositif de lecture esclave ;
la réception des informations de connexion sans fil depuis le dispositif principal (202) ; et
l'établissement d'un type particulier de connexion de communication sans fil avec le dispositif de lecture à connecter en fonction des informations de connexion sans fil (203).

5. Procédé selon la revendication 4, dans lequel la liste d'informations de dispositif de lecture comprend en outre un nom d'un groupe de lecture auquel le dispositif principal appartient et un nom d'un groupe de lecture auquel le dispositif esclave appartient ; et dans lequel les informations de sélection comprennent un nom d'un dispositif de lecture sélectionné ou un nom d'un groupe de lecture sélectionné.

6. Procédé selon la revendication 4 ou 5, avant le processus de transmission d'informations de sélection sur la base d'une liste d'informations de dispositif de lecture à un dispositif principal par un terminal de commande, le procédé comprenant en outre :
l'affichage de la liste d'informations de dispositif de lecture par le terminal de commande (301) ; et
la génération des informations de sélection sur la base de la liste d'informations de dispositif de lecture en fonction d'une opération de sélection déclenchée par un utilisateur (302).

7. Procédé selon l'une quelconque des revendications 4 à 6, dans lequel le type particulier de fonction de connexion sans fil est une fonction de connexion Bluetooth, dans lequel les informations de connexion sans fil sont des informations de connexion Bluetooth, et le type particulier de connexion de communication sans fil est une connexion Bluetooth.

8. Dispositif principal (601) agencé dans un système de lecture de contenu multimédia (600), le système de lecture de contenu multimédia (600) comprenant une pluralité de dispositifs de lecture de contenu multimédia qui comprennent le dispositif principal (601) et au moins un dispositif esclave (602), les dispositifs de la pluralité de dispositifs de lecture de contenu multimédia communiquant les uns avec les autres par l'intermédiaire d'un réseau privé, le dispositif principal (601) comprenant :
une unité de réception d'informations de sélection (401), configurée pour recevoir des informations de sélection sur la base d'une liste d'informations de dispositif de lecture envoyée depuis un terminal de commande (603), dans lequel la liste d'informations de dispositif de lecture contient un nom du dispositif principal (601) et des noms de l'au moins un dispositif de lecture esclave (602) ;
une unité d'acquisition d'informations de connexion sans fil (402), configurée pour déterminer un dispositif de lecture à connecter en fonction des informations de sélection, commander le dispositif de lecture à connecter pour activer un type particulier de fonction de connexion sans fil, et acquérir des informations de connexion sans fil du type particulier de fonction de connexion sans fil du dispositif de lecture à connecter depuis le dispositif de lecture à connecter ; et
une unité de transmission d'informations de connexion sans fil (403), configurée pour transmettre les informations de connexion sans fil acquises au terminal de commande (603), dans lequel les informations de connexion sans fil sont configurées pour que le terminal de commande (603) établisse un type particulier de connexion de communication sans fil avec le dispositif de lecture à connecter en fonction des informations de connexion sans fil.

9. Dispositif principal (601) selon la revendication 8, dans lequel la liste d'informations de dispositif de lecture comprend en outre un nom d'un groupe de lecture auquel le dispositif principal (601) appartient et un nom d'un groupe de lecture auquel le dispositif esclave (602) appartient ;
et dans lequel les informations de sélection comprennent un nom d'un dispositif de lecture sélectionné ou un nom d'un groupe de lecture sélectionné.

10. Dispositif principal (601) selon la revendication 8 ou 9, dans lequel le type particulier de fonction de connexion sans fil est une fonction de connexion Bluetooth, dans lequel les informations de connexion sans fil sont des informations de connexion Bluetooth, et le type particulier de connexion de communication sans fil est une connexion Bluetooth.

11. Terminal de commande (603), comprenant :
une unité de transmission d'informations de sélection (501), configurée pour transmettre des informations de sélection sur la base d'une liste d'informations de dispositif de lecture à un dispositif principal (601) d'un système de lecture de contenu multimédia (600), pour amener le dispositif principal (601) à déterminer un dispositif de lecture à connecter en fonction des informations de sélection, commander le dispositif de lecture à connecter pour activer un type particulier de fonction de connexion sans fil, acquérir des informations de connexion sans fil du type particulier de fonction de connexion sans fil du dispositif de lecture à connecter depuis le dispositif de lecture à connecter, et transmettre les informations de connexion sans fil acquises au terminal de commande (603), dans lequel le système de lecture de contenu multimédia (600) comprend une pluralité de dispositifs de lecture de contenu multimédia qui comprend le dispositif principal (601) et au moins un dispositif esclave (602), dans lequel les dispositifs de la pluralité de dispositifs de lecture de contenu multimédia communiquent les uns avec les autres par l'intermédiaire d'un réseau privé, la liste d'informations de dispositif de lecture contient un nom du dispositif principal (601) et des noms de 1' au moins un dispositif de lecture esclave (602) ;
une unité de réception d'informations de connexion sans fil (502), configurée pour recevoir les informations de connexion sans fil depuis le dispositif principal (601) ; et
une unité d'établissement de connexion de communication sans fil (503), configurée pour établir un type particulier de connexion de communication sans fil avec le dispositif de lecture à connecter en fonction des informations de connexion sans fil.

12. Terminal de commande (603) selon la revendication 11, dans lequel la liste d'informations de dispositif de lecture comprend en outre un nom d'un groupe de lecture auquel le dispositif principal (601) appartient et un nom d'un groupe de lecture auquel le dispositif esclave (602) appartient ;
et dans lequel les informations de sélection comprennent un nom d'un dispositif de lecture sélectionné ou un nom d'un groupe de lecture sélectionné.

13. Terminal de commande (603) selon la revendication 11 ou 12, comprenant en outre :
une unité d'affichage de liste d'informations de dispositif de lecture, configurée pour afficher la liste d'informations de dispositif de lecture avant que les informations de sélection basées sur la liste d'informations de dispositif de lecture soient transmises au dispositif principal (601) ; et
une unité de génération d'informations de sélection, configurée pour générer les informations de sélection sur la base de la liste d'informations de dispositif de lecture en fonction d'une opération de sélection déclenchée par un utilisateur.
